# EUROPÄISCHE PATENTSCHRIFT

(11) **EP 1 953 359 B1**
(45) Veröffentlichungstag und Bekanntmachung des Hinweises auf die Patenterteilung: **03.06.2009**
(21) Anmeldenummer: 08150477.1
(22) Anmeldetag: 22.01.2008
(51) Int. Cl.: F01N 7/00

(54) **Abgasanlage für eine Brennkraftmaschine**
Exhaust system for an internal combustion engine
Dispositif d'échappement d'un moteur à combustion interne

(30) Priorität: 30.01.2007 DE 102007005497
(43) Veröffentlichungstag der Anmeldung: 06.08.2008
(73) Patentinhaber: J. Eberspächer GmbH & Co. KG, 73730 Esslingen (DE)
(72) Erfinder: Harrer, Peter, 66482 Zweibrücken (DE)
(74) Vertreter: Bongen, Renaud & Partner

(56) Entgegenhaltungen:
- WO-A-00/21881
- WO-A-02/29219
- WO-A-90/00929
- US-A- 4 674 888

## Beschreibung

Die vorliegende Erfindung betrifft eine Abgasanlage für eine Brennkraftmaschine, insbesondere in einem Kraftfahrzeug.

Üblicherweise umfasst eine Abgasanlage einen Abgas von der Brennkraftmaschine abführenden Abgasstrang sowie zumindest eine im Abgasstrang angeordnete Abgasbehandlungseinrichtung, wie z.B. ein Katalysator, ein Partikelfilter und einen Schalldämpfer sowie Kombinationen daraus. Desweiteren kann eine Abgasanlage eine Einspritzeinrichtung zum Einspritzen eines flüssigen Edukts in den Abgasstrang aufweisen, die üblicherweise stromauf einer Abgasbehandlungseinrichtung am Abgasstrang angeordnet ist z.B. WO 02/29219. Beispielsweise kann ein Kraftstoff stromauf eines Oxidationskatalysators in den Abgasstrom eingespritzt werden, um am Oxidationskatalysator eine exotherme Verbrennungsreaktion auszulösen. Hierdurch kann beispielsweise ein motornah angeordneter Oxidationskatalysator rasch auf seine Betriebstemperatur gebracht werden, um bei einem Kaltstart der Brennkraftmaschine die Schadstoffemission zu reduzieren. Desweiteren kann hierdurch Wärme in den Abgasstrom eingeleitet werden, beispielsweise um ein stromab des Oxidationskatalysators angeordnetes Partikelfilter- auf eine Regenerationstemperatur aufzuheizen. Ebenso kann mit einer derartigen Einspritzeinrichtung ein Reduktionsmittel, z.B. Ammoniak, in den Abgasstrom eingespritzt werden, um in einem nachfolgend angeordneten SCR-Katalysator vom Abgas mitgeführte Stickoxide zu reduzieren. Anstelle von Ammoniak kann auch Harnstoff bzw. eine wässrige Harnstofflösung in den Abgasstrom eingespritzt werden. Durch eine Hydrolysereaktion entstehen aus der Harnstoff-Wasser-Lösung Ammoniak und Wasser. Der so erzeugte Ammoniak kann dann wieder in einem SCR-Katalysator zur Reduktion der Stickoxide im Abgas genutzt werden. Ferner kann mit Hilfe der Einspritzeinrichtung Kraftstoff oder ein anderes geeignetes Reduktionsmittel stromauf eines NOX-Speicherkatalysators in die Abgasströmung eingespritzt werden, um eine Regeneration des NOX-Speicherkatalysators zu bewirken.

Um die Wirkungsweise des in flüssiger Form in den Abgasstrang eingespritzten Edukts zu verbessern bzw. zu ermöglichen, ist eine weitgehende Verdampfung ebenso erstrebenswert wie eine intensive Durchmischung mit dem Abgas zur Homogenisierung des Abgas-Edukt-Gemischs. Dementsprechend kann die Abgasanlage mit einer im Abgasstrang stromab der Einspritzeinrichtung und stromauf der jeweiligen Abgasbehandlungseinrichtung angeordneten Misch- und/oder Verdampfungseinrichtung ausgestattet sein.

Der jeweilige Abgasstrang, in den die Abgasbehandlungseinrichtung, die Einspritzeinrichtung und die Misch- und/oder Verdampfungseinrichtung eingebaut sind, ist üblicherweise aus mehreren Bauteilen zusammengebaut, z.B. mehrere Krümmerrohre, zumindest ein Abgassammler sowie mehrere Abgasrohre, die jeweils einen abgasführenden Abschnitt des Abgasstrangs bilden. Bei einer gesteckten Bauweise kann ein solches Abgasrohr mit einem Endabschnitt in ein benachbartes anderes Rohr oder in ein Gehäuse einer Abgasbehandlungseinrichtung hineinragen.

Die vorliegende Erfindung beschäftigt sich mit dem Problem, für eine Abgasanlage der eingangs Art eine verbesserte Ausführungsform anzugeben, die sich insbesondere durch eine preiswerte Herstellbarkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Misch- und/oder Verdampfungseinrichtung in einen Endabschnitt eines Abgasrohrs zu integrieren, mit dem das jeweilige Abgasrohr in eine damit kommunizierende, benachbarte Komponente des Abgasstrangs bzw. der Abgasanlage eingesteckt ist bzw. hineinragt. Durch diese integrierte Bauweise entfällt ein die Misch- und/oder Verdampfungseinrichtung bildendes separates und zusätzliches Bauteil, das außerdem in einem zusätzlichen Arbeitsschritt in den Abgasstrang eingebaut werden muss. Dementsprechend führt die vorgeschlagene Integration der Misch- und/oder Verdampfungseinrichtung in den Endabschnitt des Abgasrohrs zu einem Preisvorteil hinsichtlich Materialkosten und Arbeitskosten. Dies ist insbesondere im Hinblick auf Großserienprodukte von besonderer Bedeutung.

Die integrale Ausbildung der Misch- und/oder Verdampfungseinrichtung am Endabschnitt des Abgasrohrs bedeutet, dass das Abgasrohr und die Misch- und/oder Verdampfungseinrichtung aus einem Stück hergestellt sind, wobei insbesondere die Misch- und/oder Verdampfungseinrichtung unmittelbar am zuvor hergestellten Abgasrohr herausgearbeitet ist. Die Misch- und/oder Verdampfungseinrichtung wird somit bevorzugt durch eine entsprechende Bearbeitung des Endabschnitts des Abgasrohrs hergestellt. Die integrale Bauweise von Abgasrohr mit Misch- und/oder Verdampfungseinrichtung schließt im vorliegenden Zusammenhang ein separates Herstellen des Abgasrohrs und der Misch- und/oder Verdampfungseinrichtung und ein anschließendes Zusammenbauen dieser separaten Bauteile zu einer Einheit aus.

Die am Endabschnitt des Abgasrohrs integral ausgebildete Misch- und/oder Verdampfungseinrichtung weist bei einer vorteilhaften Ausführungsform mehrere Strömungsleitflächen auf, die im bzw. am Endabschnitt durch entsprechend freigeschnittene und entsprechend biegeverformte Wandabschnitte des Abgasrohrs gebildet sind. Auf diese Weise lassen sich die Strömungsleitflächen und somit die Misch- und/oder Verdampfungseinrichtung besonders preiswert aus dem zuvor gefertigten Abgasrohr herausarbeiten.

Beispielsweise kann der Endabschnitt des Abgasrohrs mittels mehrerer Axialschnitte in der Umfangsrichtung segmentiert werden, wodurch mehrere, in Umfangsrichtung benachbarte Wandabschnitte voneinander separiert bzw. freigeschnitten werden. Diese können dann durch eine entsprechende Biegeverformung so verformt werden, dass sie eine Verwirbelung der im Abgasrohr geführten Abgasströmung bewirken können.

Alternativ kann bei einer anderen Ausführungsform die Misch- und/oder Verdampfungseinrichtung auch dadurch ausgebildet werden, dass ihre Strömungsleitflächen im Endabschnitt des Abgasrohrs durch axiales Anspanen und Biegeverformen von Wandabschnitten des Abgasrohrs gebildet sind. Beim axialen Anspanen wird ein radial innen liegender Bereich des jeweiligen Randabschnitts vom übrigen Randabschnitt spanabhebend getrennt. Der dabei sich ausbildende Span bildet dann die Strömungsleitfläche. Beim Anspanen wird der Spanvorgang nicht vollendet, so dass der jeweils gebildete Span an einem Ende fest mit dem übrigen Rohrkörper verbunden bleibt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage,
- Fig. 2 und 3: vergrößerte Ausschnitte der Abgasanlage, bei anderen Ausführungsformen,
- Fig. 4: eine perspektivische Ansicht eines Abgasrohrs mit integrierter Misch- und/oder Verdampfungseinrichtung,
- Fig. 5: eine Axialansicht des Abgasrohrs aus Fig. 4,
- Fig. 6: eine Seitenansicht auf ein Abgasrohr in einem Zwischenzustand eines Herstellungsprozesses,
- Fig. 7: einen Axialschnitt durch ein Abgasrohr in einem Zwischenzustand bei einem anderen Herstellungsprozess,
- Fig. 8 bis 10: axiale Ansichten auf ein Abgasrohr wie in Fig. 5, jedoch bei anderen Ausführungsformen.

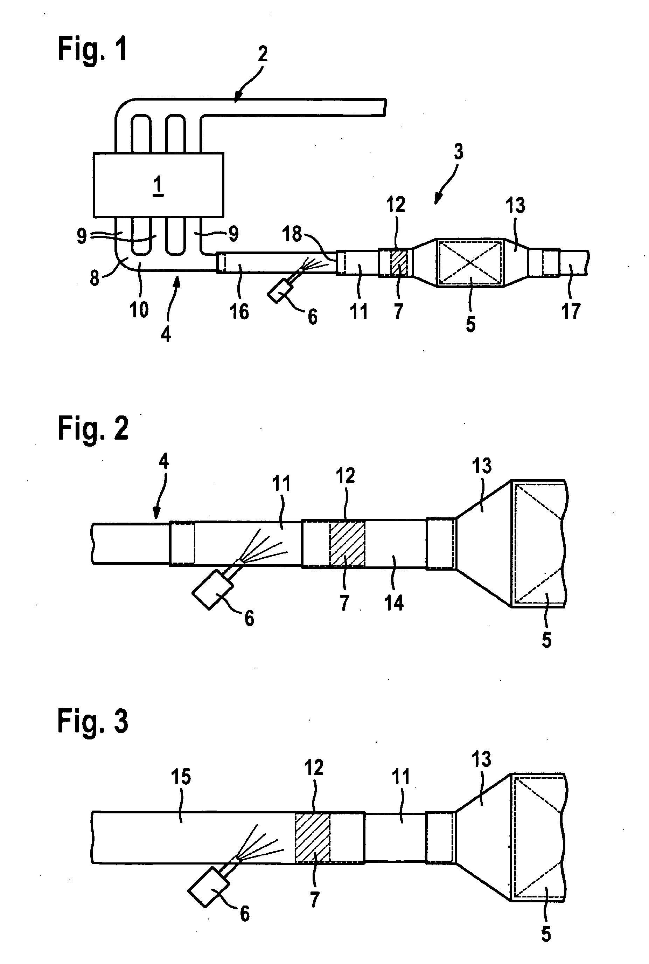

Entsprechend Fig. 1 weist eine Brennkraftmaschine 1, die beispielsweise in einem Kraftfahrzeug angeordnet sein kann, zur Versorgung mit Frischgas, vorzugsweise Luft, eine Frischgasanlage 2 und zum Abführen von Abgas eine Abgasanlage 3 auf. Eine derartige Abgasanlage 3 umfasst einen Abgasstrang 4, der im Betrieb der Brennkraftmaschine 1 das dort entstehende Abgas von der Brennkraftmaschine 1 abführt. Die Abgasanlage 3 weist zumindest eine Abgasbehandlungseinrichtung 5 auf, die im Abgasstrang 4 angeordnet ist. Bei dieser Abgasbehandlungseinrichtung 5 kann es sich beispielsweise um einen Oxidationskatalysator, um einen NOX-Speicherkatalysator, um einen Hydrolysekatalysator, um einen SCR-Katalysator, oder um ein Partikelfilter handeln. Ebenso können einzelne oder mehrere der genannten Einrichtungen in einem gemeinsamen Gehäuse, insbesondere in Verbindung mit einem Schalldämpfer, untergebracht sein. Ferner weist die Abgasanlage 3 eine Einspritzeinrichtung 6 auf, die dazu ausgestaltet ist, ein flüssiges Edukt in den Abgasstrang 4 einzuspritzen. Dabei ist die Einspritzeinrichtung 6 am Abgasstrang 4 stromauf der Abgasbehandlungseinrichtung 5 angeordnet. Beim flüssigen Edukt kann es sich vorzugsweise um Kraftstoff handeln, insbesondere um den selben Kraftstoff, mit dem auch die Brennkraftmaschine 1 betrieben wird. Ferner kann es sich beim Edukt auch um Ammoniak oder um Harnstoff bzw. um eine wässrige Harnstofflösung handeln. Sofern eine Kraftstoffinjektion vorgesehen ist, handelt es sich bei der unmittelbar stromab zur Einspritzeinrichtung 6 benachbarten Abgasbehandlungseinrichtung 5 vorzugsweise um einen Oxidationskatalysator, an dem eine Umsetzung des Kraftstoffs in Wärme erfolgt, beispielsweise um den Oxidationskatalysator auf seine Betriebstemperatur zu bringen oder um ein stromab des Oxidationskatalysators angeordnetes Partikelfilter auf eine Regenerationstemperatur aufzuheizen. Sofern die Einspritzeinrichtung 6 zum Einspritzen von Ammoniak ausgestaltet ist, kann es sich bei der Abgasbehandlungseinrichtung 5 um einen SCR-Katalysator handeln. Sofern Harnstoff eingedüst wird, kann es sich bei der unmittelbar stromab folgenden Abgasbehandlungseinrichtung vorzugsweise um einen Hydrolysekatalysator handeln, in dem der Harnstoff in Ammoniak umgesetzt wird, um einen nachfolgenden SCR-Katalysator zu beaufschlagen. Ebenso kann auf die Einspritzeinrichtung 6 direkt eine als SCR-Katalysator ausgestattete Abgasbehandlungseinrichtung 5 folgen, in der zusätzlich die Hydrolysereaktion abläuft. Darüber hinaus sind noch beliebige andere Anwendungen für die Einspritzung eines flüssigen Edukts in den Abgasstrang unmittelbar stromauf einer Abgasbehandlungseinrichtung 5 denkbar.

Um das eingespritzte flüssige Edukt möglichst rasch und möglichst vollständig im Abgas verdampfen zu können und um das verdampfte Edukt möglichst homogen mit dem Abgas zu vermischen, ist die Abgasanlage 3 außerdem mit einer Misch- und/oder Verdampfungseinrichtung 7 ausgestattet, die im Abgasstrang 4 stromab der Einspritzeinrichtung 6 und stromauf der unmittelbar zur Einspritzeinrichtung 6 benachbarten Abgasbehandlungseinrichtung 5 angeordnet ist.

Der Abgasstrang 4 ist üblicherweise durch mehrere einzelne Abschnitte gebildet, die in üblicher Weise miteinander verbunden sind. Beispielsweise ist ein Abgaskrümmer 8 vorgesehen, der mehrere einzelne Krümmerrohre 9 und einen Abgassammler 10 umfasst. Desweiteren ist zumindest ein Abgasrohr 11 vorgesehen, das einen stromab der Einspritzeinrichtung 6 und stromauf der Abgasbehandlungseinrichtung 5 angeordneten Endabschnitt 12 aufweist. Dieser Endabschnitt 12 kann wie in Fig. 1 dargestellt in ein Gehäuse 13 hineinragen, in dem die Abgasbehandlungseinrichtung 5 angeordnet ist. Entsprechend Fig. 2 kann besagter Endabschnitt 12 auch in ein anderes Rohr 14 des Abgasstrangs 4 hineinragen, das an besagtes Abgasrohr 11 bezüglich der Strömungsrichtung des Abgases stromab benachbart ist. Entsprechend Fig. 3 kann der Endabschnitt 12 auch in ein stromauf zum Abgasrohr 11 benachbartes Rohr 15 hineinragen.

Bei der in Fig. 1 gezeigten Ausführungsform umfasst der Abgasstrang 4 zwischen dem Abgaskrümmer 8 und dem Abgasrohr 11 ein weiteres Rohr 16, bei dem die Einspritzeinrichtung 6 an den Abgasstrang 4 angeschlossen ist, sowie ein Rohr 17, das vom Gehäuse 13 wegführt. Die einzelnen Komponenten des Abgasstrangs 4 sind zweckmäßig gesteckt und miteinander verlötet oder verschweißt. Wesentlich ist, dass das Abgasrohr 11 mit dem strömungstechnisch zwischen der Einspritzeinrichtung 6 und der Abgasbehandlungseinrichtung 5 angeordneten Endabschnitt 12 einen Abgas führenden Abschnitt des Abgasstrangs 4 bildet. Dieses Abgasrohr 11 enthält somit einen Teil des durch den Abgasstrang 4 gebildeten Abgaspfads und trennt im gezeigten Beispiel den Abgaspfad unmittelbar von einer Umgebung des Abgasstrangs 4. Alternativ kann das Abgasrohr 11 bei einer anderen Ausführungsform beispielsweise innerhalb eines Gehäuses einer Abgasbehandlungseinrichtung, die einen Katalysator, ein Partikelfilter, einen Schalldämpfer und die Einspritzeinrichtung sowie beliebige Kombinationen daraus enthalten kann, ein Abgas führendes Rohr bilden und insoweit innerhalb des jeweiligen Gehäuses einen Abgas führenden Abschnitt des Abgasstrangs 4 bilden.

Bei der hier gezeigten Abgasanlage 3 ist die Misch- und/oder Verdampfungseinrichtung 7 nicht durch ein zusätzliches und/oder separates Bauteil gebildet, vielmehr ist die Misch- und/oder Verdampfungseinrichtung 7 integral am Endabschnitt 12 des Abgasrohrs 11 ausgebildet. Hierdurch kann die separate Herstellung der Misch- und/oder Verdampfungseinrichtung 7 entfallen. Ebenso entfällt ein zusätzlicher Montageschritt zum Einbau einer derartigen separaten Misch- und/oder Verdampfungseinrichtung 7 in den Abgasstrang 4.

Bei der in Fig. 1 gezeigten Ausführungsform ist das Abgasrohr 11 so angeordnet, dass es mit seinem Endabschnitt 12 in das die Abgasbehandlungseinrichtung 5 aufnehmende Gehäuse 13 in der Strömungsrichtung hineinragt. Hierdurch ist die Misch- und/oder Verdampfungseinrichtung 7 unmittelbar stromauf der Abgasbehandlungseinrichtung 5 positioniert. In ein vom Endabschnitt 11 entferntes Ende 18 ist bei dieser Ausführungsform das Rohr 16 eingesteckt, an dem die Einspritzeinrichtung 6 angeordnet ist.

Entsprechend Fig. 2 kann die Einspritzeinrichtung 6 auch an besagtem Abgasrohr 11 angeordnet sein. Desweiteren zeigt Fig. 2, dass das mit der Misch- und/oder Verdampfungseinrichtung 7 ausgestattete Abgasrohr 11 nicht zwangsläufig in das Gehäuse 13 der Abgasbehandlungseinrichtung 5 eingesteckt sein muss, sondern dass es auch in ein anderes Rohr 14 eingesteckt sein kann, das zum Gehäuse 13 bzw. zur Abgasbehandlungseinrichtung 5 führt.

Während bei den Ausführungsformen der Fig. 1 und 2 das Abgasrohr 11 so in den Abgasstrang 4 eingebaut ist, dass sein Endabschnitt 12 abströmseitig angeordnet ist, zeigt Fig. 3 eine Ausführungsform, bei welcher das Abgasrohr 11 mit anströmseitig angeordneten Endabschnitt 12 im Abgasstrang 4 angeordnet ist. Das vom Endabschnitt 12 entfernte Ende 18 ist hier in das Gehäuse 13 eingesteckt. Ebenso ist grundsätzlich auch eine Ausführungsform möglich, bei welcher das Abgasrohr 11 einen integralen Bestandteil des Gehäuses 13 bildet, so dass das Abgasrohr 11 ein Abschnitt des Gehäuses 13 ist.

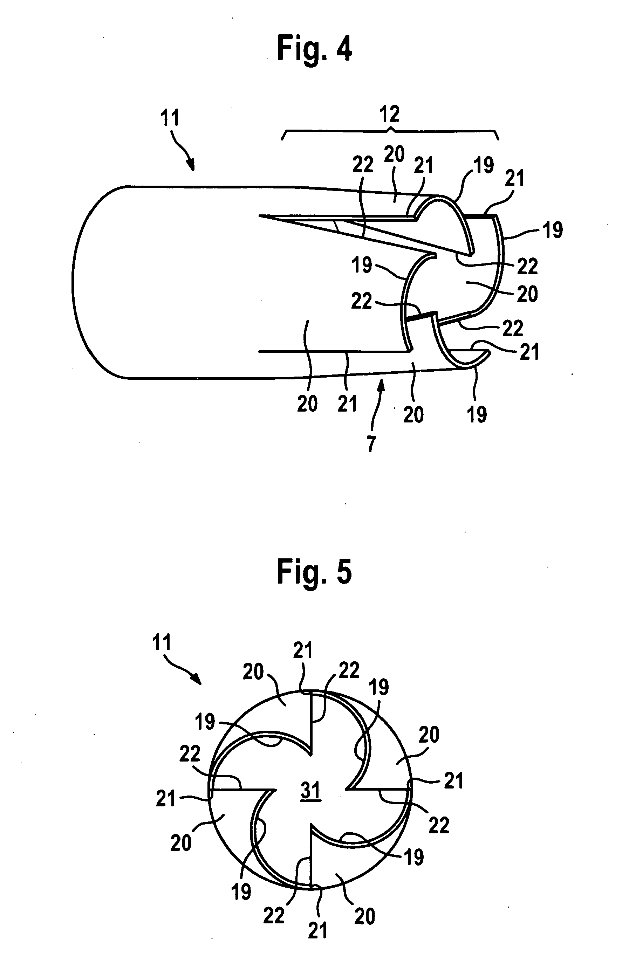

Mit Bezug auf die Fig. 4 bis 10 werden ohne Beschränkung der Allgemeinheit verschiedene Ausführungsformen zur Realisierung des Abgasrohrs 11 mit am Endabschnitt 12 integral ausgestalteter Misch- und/oder Verdampfungseinrichtung 7 näher erläutert.

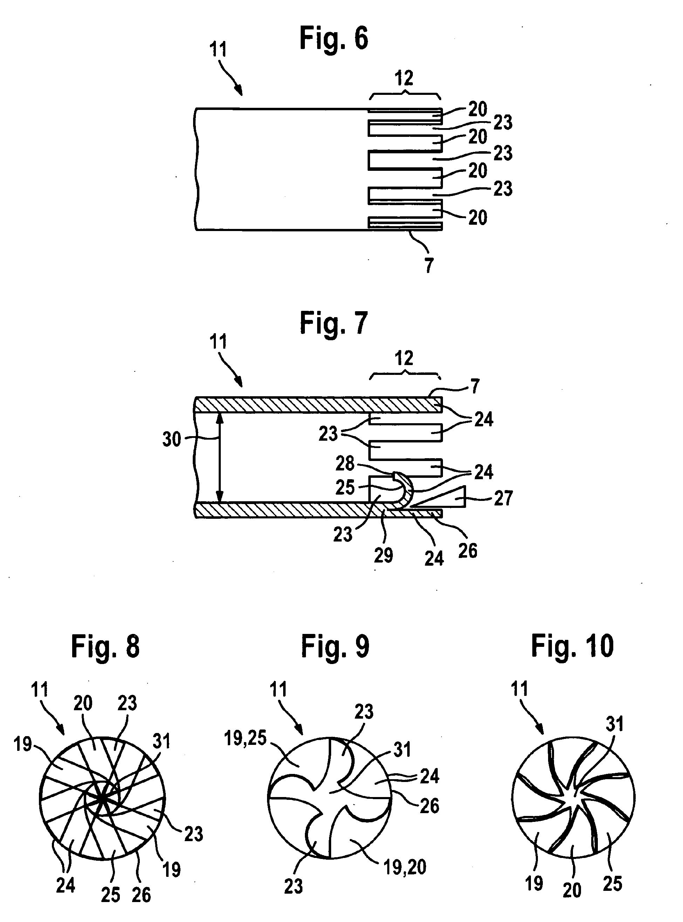

Entsprechend den Fig. 4, 5 und 8 bis 10 weist die Misch- und/oder Verdampfungseinrichtung 7 mehrere Strömungsleitflächen 19 auf, die in Umfangsrichtung des Abgasrohrs 11 zueinander benachbart sind. Bei den Ausführungsformen der Fig. 4 und 6 sind diese Strömungsleitflächen 19 am bzw. im Endabschnitt 12 durch entsprechendes Freischneiden und entsprechendes Biegeverformen von Wandabschnitten 20 des Abgasrohrs 11 gebildet. Diese Wandabschnitte 20 bilden hier außerdem den Endabschnitt 12 des Abgasrohrs 11.

Entsprechend Fig. 4 und 5 können dabei die einzelnen Wandabschnitte 20 durch Axialschnitte voneinander in Umfangsrichtung getrennt sein. Die dabei entstehenden Schnittkanten sind in den Fig. 4 und 5 mit 21 bzw. 22 bezeichnet. Die Axialschnitte werden dabei mit einem geeigneten Schneidverfahren oder Abkantverfahren hergestellt. Bei der in den Fig. 4 und 5 gezeigten Ausführungsform grenzen die in Umfangsrichtung benachbarten Wandabschnitte 20 unmittelbar aneinander an, d.h. dem Abgasrohr 11 wird beim Freischneiden der Wandabschnitte 20 kein Material entnommen. Im Unterschied dazu zeigen die Fig. 6 und 7 in vereinfachter Darstellung Ausführungsformen, bei denen in Umfangsrichtung benachbarte Wandabschnitte 20 außerdem in Umfangsrichtung voneinander beabstandet sind, d.h. zwischen in Umfangsrichtung benachbarten Wandabschnitten 20 ist jeweils eine Lücke 23 ausgebildet. Diese Lücken 23 entstehen durch Entfernen entsprechender anderer, hier nicht gezeigter Wandabschnitte oder Rohrteile aus dem Abgasrohr 11 im Rahmen der Herstellung der Misch- und/oder Verdampfungseinrichtung 7. Fig. 6 zeigt das Abgasrohr 11 nach dem Freischneiden der Wandabschnitte 20, die zur Ausbildung der Strömungsleitflächen 19 dienen, jedoch in einem Herstellungsstadium vor dem Biegeverformen der Wandabschnitte 20.

Fig. 7 zeigt eine andere Möglichkeit zur Ausbildung der Strömungsleitflächen 19. Bei dieser Ausführungsform werden die Strömungsleitflächen 19 durch axiales Anspanen und Biegeverformen von Wandabschnitten 24 des Abgasrohrs 11 gebildet. Dabei wird die jeweilige Strömungsleitfläche 19 durch einen radial innen liegenden Bereich 25 des jeweiligen Wandabschnitts 24 gebildet, indem dieser innen liegende Bereich 25 durch den Anspanvorgang vom übrigen, radial außen liegenden Bereich 26 des jeweiligen Wandabschnitts 24 getrennt wird. Das axiale Anspanen ist in Fig. 7 durch einen Keil 27 angedeutet, der sich in axialer Richtung in den Wandabschnitt 24 einschneidet. Beim Anspanen verbleibt der sich ausbildende Span, also der innenliegende Bereich 25 fest mit dem übrigen, also außen liegenden Bereich 26 verbunden. Dementsprechend wird am Ende die jeweilige Strömungsleitfläche 19 durch den innen liegenden Bereich 25 gebildet, der von seinem freien Ende 28 bis zu einer Anbindungsstelle 29, an der er in den Wandabschnitt 24 übergeht, axial durch Spanabheben von diesem Wandabschnitt 24 getrennt ist. Zweckmäßig ist dabei der jeweilige Wandabschnitt 24 vom axialen Ende des Abgasrohrs 11 angespant. Ebenso ist es grundsätzlich möglich, das Anspanen so auszuführen, dass ein zwischen den axialen Enden des Abgasrohrs 11 liegender Bereich angespant wird.

Bei der in Fig. 7 gezeigten Ausführungsform werden die einzelnen Wandabschnitte 24, deren radial innen liegender Bereich 25 durch Anspanen die Strömungsleitflächen 19 bilden, vorab freigeschnitten, derart, dass wieder Lücken 23 zwischen den in Umfangsrichtung benachbarten Wandabschnitten 24 entstehen.

Bei den Ausführungsformen der Fig. 6 bis 8 sind die zwischen in Umfangsrichtung benachbarten Wandabschnitten 24 ausgebildeten Lücken 23 im Profil rechteckförmig ausgestaltet. Bei den in den Fig. 9 und 10 gezeigten Ausführungsformen sind die zwischen in Umfangsrichtung benachbarten Wandabschnitten 24 ausgebildeten Lücken 23 dreieckig ausgestaltet. Ebenso ist es grundsätzlich möglich, die Lücken 23 zwischen in Umfangsrichtung benachbarten Wandabschnitten 24 trapezförmig auszugestalten.

Das Biegeverformen der freigeschnittenen Wandabschnitte 24 bzw. der angespanten Wandabschnitte 24 bzw. des jeweiligen inneren Bereichs 25 erfolgt entsprechend den Fig. 4, 5 und 8 bis 10 beispielsweise durch eine schraubenförmige Verformung, bei der der jeweilige Wandabschnitt 20 bzw. 24 bzw. Bereich 25 in den durchströmbaren Querschnitt 30 (vgl. Fig. 7) hineingebogen wird.

Dabei können die Wandabschnitte 20, 24 bzw. der jeweilige Bereich 25 so gebogen werden, dass jeweils die eine Schnittkante 22 geradlinig ist und gegenüber der Axialrichtung radial nach innen geneigt ist. Desweiteren kann die andere Schnittkante 21 gemäß der in den Fig. 4 und 5 gezeigten Ausführungsform geradlinig sein und sich axial erstrecken. Alternativ kann sich die andere Schnittkante 21 gemäß Fig. 8 geradlinig erstrecken und dabei gegenüber der Axialrichtung ebenfalls radial nach innen geneigt sein, wobei jedoch die beiden Schnittkanten 21, 22 zweckmäßig unterschiedliche Neigungswinkel gegenüber der Axialrichtung aufweisen. Die Strömungsleitflächen 19 sind bei den hier gezeigten Ausführungsformen zweckmäßig so geformt, dass sie die im Abgasrohr 10 geführte Abgasströmung mit einem Drall um die Längsmittelachse des Abgasrohrs 11 beaufschlagen. Insbesondere können die Strömungsleitflächen 19 so geformt sein, dass sie mit ihren freien Enden für die Abgasströmung entsprechend den Fig. 5 und 8 bis 10 jeweils eine propellerförmige Durchtrittsöffnung 31 ausbilden.

Bei den Ausführungsformen der Fig. 4, 5 und 9 weist die jeweilige Misch- und/oder Verdampfungseinrichtung 7 jeweils vier Strömungsleitflächen 19 auf, während bei den Ausführungsformen der Fig. 8 und 10 jeweils acht Strömungsleitflächen 19 vorgesehen sind. Die vier bzw. acht Strömungsleitflächen 19 sind dabei rein exemplarisch und ohne Beschränkung der Allgemeinheit, so dass auch mehr oder weniger Strömungsleitflächen 19 vorgesehen sein können.

## Patentansprüche

1. Abgasanlage für eine Brennkraftmaschine (1), insbesondere in einem Kraftfahrzeug,
- mit einem Abgas von der Brennkraftmaschine (1) abführenden Abgasstrang (4),
- mit wenigstens einer im Abgasstrang (4) angeordneten Abgasbehandlungseinrichtung (5),
- mit einer am Abgasstrang (4) stromauf der Abgasbehandlungseinrichtung (5) angeordneten Einspritzeinrichtung (6) zum Einspritzen eines flüssigen Edukts in den Abgasstrang (4),
- mit einer im Abgasstrang (4) stromab der Einspritzeinrichtung (6) und stromauf der Abgasbehandlungseinrichtung (5) angeordneten Misch- und/oder Verdampfungseinrichtung (7) für das eingespritzte Edukt,
- wobei zumindest ein Abgas führender Abschnitt des Abgasstrangs (4) durch ein Abgasrohr (11) gebildet ist,
- wobei das Abgasrohr (11) einen stromab der Einspritzeinrichtung (6) und stromauf der Abgasbehandlungseinrichtung (5) angeordneten Endabschnitt (12) aufweist, der in ein stromauf oder stromab benachbartes anderes Rohr (14,15) des Abgasstrangs (4) oder in ein die Abgasbehandlungseinrichtung (5) enthaltendes Gehäuse (13) hineinragt,
- wobei die Misch- und/oder Verdampfungseinrichtung (7) integral am Endabschnitt (12) des Abgasrohrs (11) ausgebildet ist.

2. Abgasanlage nach Anspruch 1,
**dadurch gekennzeichnet,**
**dass** die Misch- und/oder Verdampfungseinrichtung (7) mehrere Strömungsleitflächen (19) aufweist, die im oder am Endabschnitt (12) durch entsprechend freigeschnittene und entsprechend biegeverformte Wandabschnitte (20) des Abgasrohrs (11) gebildet sind.

3. Abgasanlage nach Anspruch 2,
**dadurch gekennzeichnet,**
**dass** die Wandabschnitte (20) den axialen Endabschnitt (12) des Abgasrohrs (11) bilden.

4. Abgasanlage nach Anspruch 1,
**dadurch gekennzeichnet,**
**dass** die Misch- und/oder Verdampfungseinrichtung (7) mehrere Strömungsleitflächen (19) aufweist, die im Endabschnitt (12) durch axiales Anspanen und Biegeverformen von Wandabschnitten (24) des Abgasrohrs (11) gebildet sind.

5. Abgasanlage nach Anspruch 4,
**dadurch gekennzeichnet,**
**dass** die jeweilige Strömungsleitfläche (19) durch einen radial innen liegenden Bereich (25) des jeweiligen Wandabschnitts (24) gebildet ist, der von seinem freien Ende (28) bis zu einer Anbindungsstelle (29), an der er in den Wandabschnitt (24) übergeht, axial durch Spanabheben vom Wandabschnitt (24) getrennt ist.

6. Abgasanlage nach Anspruch 4 oder 5,
**dadurch gekennzeichnet,**
**dass** die Wandabschnitte (24) vom axialen Ende des Abgasrohrs (11) an angespant sind.

7. Abgasanlage nach einem der Ansprüche 2 bis 6,
**dadurch gekennzeichnet,**
**dass** die Wandabschnitte (20) durch Axialschnitte veneinander in Umfangsrichtung getrennt sind.

8. Abgasanlage nach einem der Ansprüche 2 bis 6,
**dadurch gekennzeichnet,**
**dass** durch das Freischneiden der Wandabschnitte (20,24) zwischen in Umfangsrichtung benachbarten Wandabschnitten (20,24) Lücken (23) ausgebildet sind.

9. Abgasanlage nach Anspruch 8,
**dadurch gekennzeichnet,**
**dass** zur Ausbildung der Lücken (23) im Profil rechteckförmige oder dreieckige oder trapezförmige Rohrteile zwischen den in Umfangsrichtung benachbarten Wandabschnitten (20,24) aus dem Abgasrohr (11) ausgeschnitten sind.

10. Abgasanlage nach einem der Ansprüche 7 bis 9,
**dadurch gekennzeichnet,**
**dass** die Strömungsleitflächen (19) oder die Wandabschnitte (20) zumindest an einer Längsseite durch Biegeverformen schraubenförmig in den Querschnitt (30) des Abgasrohrs (11) hineingebogen sind.

11. Abgasanlage nach Anspruch 10,
**dadurch gekennzeichnet,**
**dass** die Strömungsleitflächen (19) oder die Wandabschnitte (20,24) so gebogen sind, dass jeweils die eine Schnittkante (22) oder der Längsseite geradlinig ist und gegenüber der Axialrichtung radial nach innen geneigt ist, während die andere Schnittkante (21) oder Längsseite geradlinig ist und sich axial erstreckt oder ebenfalls gegenüber der Axialrichtung, jedoch mit einem anderen Winkel radial nach innen geneigt ist.

12. Abgasanlage nach einem der Ansprüche 2 bis 11,
**dadurch gekennzeichnet,**
**dass** die Strömungsleitflächen (19) so geformt sind, dass sie die Abgasströmung mit einem Drall um die Längsmittelachse des Abgasrohrs (11) beaufschlagen.

13. Abgasanlage nach einem der Ansprüche 2 bis 12,
**dadurch gekennzeichnet,**
**dass** die Strömungsleitflächen (19) so geformt sind, dass sie mit ihren freien Enden für die Abgasströmung eine propellerförmige Durchtrittsöffnung (31) bilden.

14. Abgasrohr für eine Abgasanlage nach einem der Ansprüche 1 bis 13,
**gekennzeichnet durch** einen als Misch- oder/oder Verdampfungseinrichtung (7) ausgestalteten Endabschnitt (12).

## Claims

1. An exhaust system for an internal combustion engine (1), more preferably in a motor vehicle,
- with an exhaust line (4) discharging exhaust gas from the internal combustion engine (1),
- with at least one exhaust gas treatment device (5) arranged in the exhaust line (4),
- with an injection device (6) for injecting a liquid educt in the exhaust line (4) arranged on the exhaust line (4) upstream of the exhaust gas treatment device (5),
- with a mixing and/or evaporation device (7) for the injected educt arranged in the exhaust line (4) downstream of the injection device (6) and upstream of the exhaust gas treatment device (5),
- wherein at least one region of the exhaust line (4) carrying exhaust gas is formed by an exhaust pipe (11),
- wherein the exhaust pipe (11) comprises an end section (12) arranged downstream of the injection device (6) and upstream of the exhaust gas treatment device (5), which protrudes into another pipe (14, 15) of the exhaust line (4) adjacent upstream or downstream or into a housing (13) containing the exhaust gas treatment device (5),
- wherein the mixing and/or evaporation device (7) is integrally formed on the end section (12) of the exhaust pipe (11).

2. The exhaust system according to Claim 1,
**characterized in that**
the mixing and/or evaporation device (7) comprises several flow guiding surfaces (19) which are formed in the or on the end section (12) through wall sections (20) of the exhaust pipe (11) which are suitably recessed and suitably formed through bending.

3. The exhaust system according to Claim 2,
**characterized in that**
the wall sections (20) form the axial end section (12) of the exhaust pipe (11).

4. The exhaust system according to Claim 1,
**characterized in that**
the mixing and/or evaporation device (7) comprises a plurality of flow guiding surfaces (19) which in the end section (12) are formed through axial initial chip removal and forming through bending of wall sections (24) of the exhaust pipe (11).

5. The exhaust system according to Claim 4,
**characterized in that**
the respective flow guiding surface (19) is formed through a region (25) of the respective wall section (24) located on the inside which from its free end (28) to a connecting point (29) at which it merges with the wall section (24), is axially separated from the wall section (24) through chip removal.

6. The exhaust system according to Claim 4 or 5,
**characterized in that**
the wall sections (24) are subjected to initial chip removal from the axial end of the exhaust pipe (11).

7. The exhaust system according to any one of the Claims 2 to 6,
**characterized in that**
the wall sections (20) are separated from one another through axial cuts in circumferential direction.

8. The exhaust system according to any one of the Claims 2 to 6,
**characterized in that**
through the clear-cutting of the wall sections (20, 24) gaps (23) are formed between wall sections (20, 24) adjacent in circumferential direction.

9. The exhaust system according to Claim 8,
**characterized in that**
for forming the gaps (23), pipe parts which in profile are rectangular shaped or triangular or trapezium-shaped are cut out of the exhaust pipe (11) between the wall sections (20, 24) adjacent in circumferential direction.

10. The exhaust system according to any one of the Claims 7 to 9,
**characterized in that**
the flow guiding surfaces (19) or the wall sections (20) at least on one longitudinal side are bent into the cross section (30) of the exhaust pipe (11) screw-like through bending forming.

11. The exhaust system according to Claim 10,
**characterized in that**
the flow guiding surfaces (19) or the wall sections (20, 24) are so bent that the one cut edge (22) or the long side in each case is in a straight line and with respect to the axial direction is radially inclined to the inside, while the other cut edge (21) or long side is in a straight line and extends axially, or likewise relative to the axial direction, is inclined radially to the inside however with a different angle.

12. The exhaust system according to any one of the Claims 2 to 11,
**characterized in that**
the flow guiding surfaces (19) are formed so that they impart a swirl to the exhaust flow about the longitudinal centre axis of the exhaust pipe (11).

13. The exhaust system according to any one of the Claims 2 to 12,
**characterized in that**
the flow guiding surfaces (19) are so formed that with their free ends they form a propeller-shaped passage opening (31) for the exhaust flow.

14. An exhaust pipe for an exhaust system according to any one of the Claims 1 to 13,
**characterized by** an end section (12) embodied as mixing and/or evaporation device (7).

## Revendications

1. Installation d'échappement pour un moteur à combustion interne (1), en particulier dans un véhicule automobile,
- comprenant un tronçon d'échappement (4) évacuant des gaz brûlés du moteur à combustion interne (1),
- au moins un dispositif de traitement de gaz brûlés (5) disposé dans le tronçon d'échappement (4),
- un dispositif d'injection (6) disposé sur le tronçon d'échappement (4) en aval du dispositif de traitement de gaz brûlés (5) pour l'injection d'un éduit liquide dans le tronçon d'échappement (4),
- un dispositif de mélange et/ou d'évaporation (7) disposé dans le tronçon d'échappement (4) en aval du dispositif d'injection (6) et en amont du dispositif de traitement de gaz brûlés (5) pour l'éduit injecté,
- au moins une partie véhiculant des gaz brûlés du tronçon d'échappement (4) étant formée par un tuyau d'échappement (11),
- le tuyau d'échappement (11) présentant une partie d'extrémité (12) disposée en aval du dispositif d'injection (6) et en amont du dispositif de traitement de gaz brûlés (5), qui dépasse à l'intérieur d'un autre tuyau (14, 15), voisin en amont ou en aval, du tronçon d'échappement (4) ou à l'intérieur d'un boîtier (13) contenant le dispositif de traitement de gaz brûlés (5),
- le dispositif de mélange et/ou d'évaporation (7) étant formé intégralement sur la partie d'extrémité (12) du tuyau d'échappement (11).

2. Installation d'échappement selon la revendication 1,
**caractérisée en ce que**
le dispositif de mélange et/ou d'évaporation (7) présente plusieurs surfaces de guidage d'écoulement (19), qui sont formées dans ou sur la partie d'extrémité (12) par des parties de paroi (20), découpées librement de façon appropriée et déformées par flexion de façon appropriée, du tuyau d'échappement (11).

3. Installation d'échappement selon la revendication 2,
**caractérisée en ce que**
les parties de paroi (20) forment la partie d'extrémité (12) axiale du tuyau d'échappement (11).

4. Installation d'échappement selon la revendication 1,
**caractérisée en ce que**
le dispositif de mélange et/ou d'évaporation (7) présente plusieurs surfaces de guidage d'écoulement (19), qui sont formées dans la partie d'extrémité (12) par étirage axial et déformation par flexion de parties de paroi (24) du tuyau d'échappement (11).

5. Installation d'échappement selon la revendication 4,
**caractérisée en ce que**
la surface de guidage d'écoulement (19) respective est formée par une zone (25), disposée radialement à l'intérieur, de la partie de paroi (24) respective, qui est séparée de son extrémité (28) libre jusqu'à un endroit de rattachement (29), sur lequel elle fait place à la partie de paroi (24), axialement par enlèvement de copeaux de la partie de paroi (24).

6. Installation d'échappement selon la revendication 4 ou 5,
**caractérisée en ce que**
les parties de paroi (24) sont étirées à partir de l'extrémité axiale du tuyau d'échappement (11).

7. Installation d'échappement selon l'une quelconque des revendications 2 à 6,
**caractérisée en ce que**
les parties de paroi (20) sont séparées les unes des autres par des coupes axiales dans le sens périphérique.

8. Installation d'échappement selon l'une quelconque des revendications 2 à 6,
**caractérisée en ce que**
des vides (23) sont formés par le découpage libre des parties de paroi (20, 24) entre des parties de paroi (20, 24) voisines dans le sens périphérique.

9. Installation d'échappement selon la revendication 8,
**caractérisée en ce que**
pour former les vides (23) dans le profil, des parties de tuyau rectangulaire ou triangulaire ou trapézoïdales sont découpées dans le tuyau d'échappement (11) entre les parties de paroi (20, 24) voisins dans le sens périphérique.

10. Installation d'échappement selon l'une quelconque des revendications 7 à 9,
**caractérisée en ce que**
les surfaces de guidage d'écoulement (19) ou les parties de paroi (20) sont pliées au moins sur un côté longitudinal par déformation par flexion en forme de vis à l'intérieur de la section (30) du tuyau d'échappement (11).

11. Installation d'échappement selon la revendication 10,
**caractérisée en ce que**
les surfaces de guidage d'écoulement (19) ou les parties de paroi (20, 24) sont pliées de telle sorte que, à chaque fois l'une des arêtes de coupe (22) ou l'un des côtés longitudinaux est rectiligne et est incliné radialement vers l'intérieur par rapport à la direction axiale, alors que l'autre arête de coupe (21) ou l'autre côté longitudinal est rectiligne et s'étend axialement ou est incliné radialement vers l'intérieur également par rapport à la direction axiale, mais avec un autre angle.

12. Installation d'échappement selon l'une quelconque des revendications 2 à 11,
**caractérisée en ce que**
les surfaces de guidage d'écoulement (19) sont formées de telle sorte qu'elles alimentent l'écoulement des gaz brûlés avec une rotation autour de l'axe médian longitudinal du tuyau d'échappement (11).

13. Installation d'échappement selon l'une quelconque des revendications 2 à 12,
**caractérisée en ce que**
les surfaces de guidage d'écoulement (19) sont formées de telle sorte qu'elles forment avec leurs extrémités libres une ouverture de passage (31) en forme d'hélice pour l'écoulement des gaz brûlés.

14. Tuyau d'échappement pour une installation d'échappement selon l'une quelconque des revendications 1 à 13,
**caractérisé par** une partie d'extrémité (12) conçue comme dispositif de mélange et/ou d'évaporation (7).
